# EUROPEAN PATENT APPLICATION

(11) **EP 4 835 802 A1**
(43) Date of publication of application: **04.11.2026**
(21) Application number: 26173760.5
(22) Date of filing: 21.04.2026
(51) Int. Cl.: G06T 5/60, G06T 5/70, G06T 5/73

(54) **MACHINE TRAINED MODELS FOR HIGH DYNAMIC RANGE IMAGE PROCESSING**

(30) Priority: 30.04.2025 US 202519195600
(71) Applicant: Microsoft Technology Licensing, LLC, Redmond, WA 98052 (US)
(72) Inventor: PANDYA, Shyam Mehulkumar, Redmond, 98052 (US); NENE, Sameer Avinash, Redmond, 98052 (US)
(74) Representative: CMS Cameron McKenna Nabarro Olswang LLP

(57) **Abstract**

An input image is received comprising a high dynamic range (HDR) image from a pipeline. The input image is processed to produce an output image such as by super resolution, denoising or frame generation. The processing is done using a machine trained model that is compatible with HDR images, executing at least in part on an accelerator. The output image may be used in the pipeline. The method may be executed at a rate matching or exceeding a rate of the pipeline.

## Description

### BACKGROUND

Dynamic range, in the context of an image, refers to the variation in luminosity between the brightest and darkest area depicted in the image, as well as to a range of colors that may potentially be depicted in the image. A standard dynamic range (SDR) image has a lower bit color depth and a narrower color gamut than a high dynamic range (HDR) image.

An HDR image, when displayed using an appropriate display, gives a wider range between the brightest and darkest points on the display screen and a wider color gamut than for an SDR image. When an HDR image is displayed on an appropriate display a user perceives a more realistic image than where an SDR image is displayed.

Processing HDR images is useful for a variety of applications such as viewing videos, playing video games and other applications.

The embodiments described below are not limited to implementations which solve any or all of the disadvantages of known ways of processing HDR images.

### SUMMARY

The following presents a simplified summary of the disclosure in order to provide a basic understanding to the reader. This summary is not intended to identify key features or essential features of the claimed subject matter nor is it intended to be used to limit the scope of the claimed subject matter. Its sole purpose is to present a selection of concepts disclosed herein in a simplified form as a prelude to the more detailed description that is presented later.

HDR images are increasingly available and yet ways of processing these images using machine trained models is not straightforward.

An input image is received comprising a high dynamic range (HDR) image from a pipeline, e.g., a rendering pipeline or other pipeline of an operating system. The input image is processed to produce an output image. The processing is done using a machine trained model that is compatible with HDR images, executing at least in part on an accelerator. The output image may be used in place of an output image of the pipeline or may be additional output of the pipeline. The method may be executed at a rate matching or exceeding a rendering rate of the pipeline. In some examples, the processing of the input image super resolves the input image. In some examples, the processing of the input image denoises the input image. In some examples, the processing of the input images carries out image (also referred to as frame) generation.

Many of the attendant features will be more readily appreciated as the same becomes better understood by reference to the following detailed description considered in connection with the accompanying drawings.

### DESCRIPTION OF THE DRAWINGS

The present description will be better understood from the following detailed description read in light of the accompanying drawings, wherein:
FIG. 1 shows a computing device with an operating system comprising image processing functionality that is compatible with HDR images, according to some embodiments;
FIG. 2 is a flow diagram of using a super resolution model with an SDR image, and of a flow diagram of using a super resolution model with an HDR image, according to some embodiments;
FIG. 3A is a flow diagram of a method of generating training data for training a super resolution model that is HDR compatible, according to some embodiments;
FIG. 3B is a flow diagram of a method of generating training data for training a denoising model that is HDR compatible, according to some embodiments;
FIG. 3C is a flow diagram of a method of generating training data for training a frame generation model that is HDR compatible, according to some embodiments;
FIG. 4 is a flow diagram of a method of training a model that is HDR compatible, according to some embodiments;
FIG. 5 is a flow diagram of an example of operation 408 of FIG. 4 in more detail;
FIG. 6 is a flow diagram of another example of operation 408 of FIG. 4 in more detail;
FIG. 7 is a flow diagram of a method of using an HDR compatible machine trained model with an HDR image, according to some embodiments;
FIG. 8 illustrates an example computing-based device in which image processing functionality for HDR images is implemented.
Like reference numerals are used to designate like parts in the accompanying drawings.

### DETAILED DESCRIPTION

The detailed description provided below in connection with the appended drawings is intended as a description of the present examples and is not intended to represent the only forms in which the present examples are constructed or utilized. The description sets forth the functions of the examples and the sequence of operations for constructing and operating the examples. However, the same or equivalent functions and sequences may be accomplished by different examples.

Image processing of HDR images is useful in many applications such as for HDR video viewing, HDR digital photography, HDR video games and other applications. There is a desire to process HDR images in order to perform tasks such as to remove artifacts from the images, change lighting effects or color spaces of the images, change a camera viewpoint of an image, remove noise (referred to as denoising), super resolve the HDR images, or generate HDR images such as to increase a frame rate of an HDR video. In some cases, a combination of one or more of these tasks is to be performed on an HDR image.

Denoising refers to processing an image to remove noise while preserving the original content and structure of the image. Noise may have been introduced through image compression carried out to facilitate transfer of an image over a communications link. In some cases, noise is introduced by sensors in an image capture device or due to the way the image is created. Denoising is useful in a wide range of scenarios including video streaming such as where videos are streamed to an end user device for viewing, medical image processing. Denoising is difficult to achieve for HDR images since existing denoising technology is generally not compatible with HDR images.

Frame generation is useful to increase the frame rate of a video such as in video gaming. It may be computationally expensive to render a frame from a complex 3D model and to improve efficiency and reduce power consumption, the rendering rate may be reduced such as by rendering only every other frame. In order to top the frame rate back up to the original frame rate (so as to maintain viewer experience of the video game) frame generation may be used to generate the missing frames. Since the frame generation process is less computationally expensive than the rendering process there are efficiency gains and there is reduced power consumption. Frame generation is difficult to achieve for HDR images since existing frame generation technology is generally not compatible with HDR images.

Super resolution refers to processing an image to increase the resolution of the image while preserving the original content and structure of the image. Missing high-frequency detail of a low resolution input image is generated and added to the low-resolution input image to form a super resolved version of the input image.

Super resolution may be used to enable increased frame rate of frames rendered in a video game. A game's rendering resolution may be lowered to increase frame rate and by using super resolution processing the low resolution frames are converted to higher resolution frames at the increased frame rate. In this way, it is possible to improve user experience since the frame rate is increased and yet photorealism and quality of content depicted in the frames is not detrimented. By increasing frame rate of a video game a user experiences lower latency between their user input and changes triggered in the game content by the user input. By increasing frame rate of a video game a user experiences improved perception of motion of objects depicted in the video game.

Super resolution is generally incompatible with HDR video games which is problematic, especially given the increasing number of HDR video games available.

The present technology concerns various ways to enable image processing performed by a machine trained model to be compatible with HDR video games or other HDR images. In various examples, there is an operating system comprising functionality for HDR compatible image processing. The functionality comprises a machine trained model which optionally executes at least in part using an accelerator in the computing device. The accelerator is a hardware device such as a graphics processing unit, neural processing unit, or other accelerator. By using the operating system to manage the HDR compatible image processing and use of the accelerator, efficiencies are gained that enable improved video playback or improved video gaming experiences, with reduced power consumption.

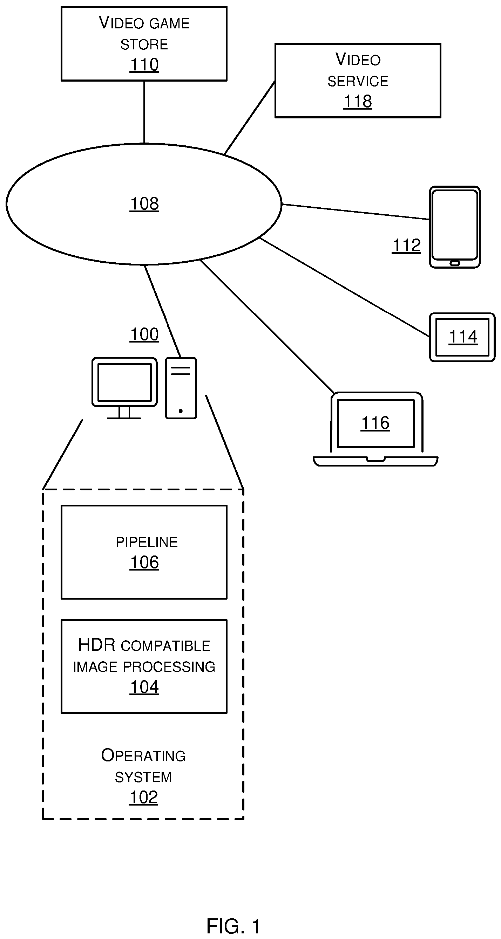

FIG. 1 shows a computing device 100 with an operating system 102 comprising image processing functionality 104 that is compatible with HDR images, according to some embodiments. The image processing functionality 104 comprises a machine trained model. Computing device 100 is a desktop personal computer in this example although other types of computing device may be used such as a laptop computer 116, tablet computer 114, smart phone 112, head worn computer, wearable computer or other computing device. The computing device has a display which may be a display screen, a projector for projecting an image, or any other type of display. The display is suitable for displaying HDR images; that is the display is capable of displaying an HDR image so that a wider range of brightness and/or color is perceived by a user as compared with displaying an SDR image on the display. In some examples, the computing device stores an HDR video game such as by having downloaded the HDR video game from a video game store 110. In another example the computing device streams a video from a video service 118 accessed via a communications network 108 such as the Internet, an intranet or any other communications network.

A pipeline 106 in the operating system 102 of the computing device outputs images to the display. In some cases, the pipeline 106 is a rendering pipeline that renders images from a complex 3D model of the HDR video game and outputs the rendered HDR images to the display. In some cases, the pipeline 106 in the operating system 102 receives streamed HDR video from a video service 118 and outputs images of the video to the display (without performing rendering).

The image processing functionality performs any type of image processing achieved using a machine trained model on HDR images. In some examples, the image processing functionality 104 comprises a frame generator that generates images which are inserted into the pipeline 106 to increase a frame rate of the video being displayed.

In some examples, the image processing functionality 104 performs denoising of an image or video displayed by the pipeline 106.

In some examples, the HDR compatible image processing functionality 104 may super resolve an image rendered by the rendering pipeline and may insert the super resolved image at an output of the rendering pipeline. The rendering pipeline may render images from the 3D model at a lower resolution than an available resolution of the display in order that a rendering frame rate is increased (as compared to a maximum frame rate possible for rendering at the resolution of the display given the 3D model complexity and the available computing hardware at the computing device). The super resolution functionality may increase the resolution of the rendered images towards the available resolution of the display. The super resolution functionality may operate at the increased frame rate. The result is an improved user experience since the images displayed at the display have high dynamic range, high resolution and an increased frame rate.

The HDR compatible image processing functionality 104 comprises a machine trained model. However, it is not straightforward to develop the machine trained model for a number of different reasons. Alternatively, or in addition, the HDR compatible image processing functionality described herein is performed, at least in part, by one or more hardware logic components implemented as part of an accelerator. For example, illustrative types of hardware logic components that are optionally used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), Graphics Processing Units (GPUs), neural processing units (NPUs).

It is recognized herein that data format is a significant problem when trying to develop the machine trained model for processing HDR images. There is incompatibility of formats between SDR and HDR images. An SDR image is typically stored in portable network graphics (PNG) format and is typically an 8 bit per color channel (8 bpc) uint (unsigned integer) sRGB image. The sRGB standard defines the chromacities of the red, green, and blue primaries. In contrast, high dynamic range image captures are often 16 bit per color channel float linear scRGB / non-linear BT.2100 images stored as OpenEXR format. OpenEXR is a high dynamic range, multi-channel raster file format and scRGB is a wide color gamut RGB color space. In order to display a frame a swap chain is used. A swap chain is a plurality of buffers that are used for displaying frames to a user. Each time an application presents a new frame for display, the first buffer in the swap chain takes the place of the displayed buffer in a process referred to as swapping.

An example HDR format as part of a swap chain is: floating point FP16 scRGB color space linear gamma; or RGB10(32-bit unsigned normalized integer format) BT.2100 (non-linear) color space. In order to work with images of this format for inference, it is desired to train models in this format. Obtaining data in FP16 linear scRGB (RGBA) color space is accurate and conveniently available but it is found that a machine trained model requires non-linearity in the data to converge well. Hence, in various examples, images in FP16 linear scRGB (RGBA) color space are converted to FP16 RGBA BT.2100 (non-linear PQ) color space. In various examples a machine trained model is trained using images in FP16 RGBA BT.2100 (non-linear PQ) color space and during inference, if the input is scRGB, the input is transformed to FP16 RGBA BT.2100 (non-linear PQ) before input to the model, and if the input is RGB10, then the pixel format is modified to FP16 RGBA before passing the input to the model.

It is recognized herein that linearity is a significant problem when trying to develop the machine trained model for processing HDR images. The machine trained model is found empirically to perform better where input images are normalized and include non-linearity. However, the scRGB color space (e.g., FP16scRGB color space linear gamma) lacks both non-linearity and normalization.

It is recognized herein that characteristics of a loss function used to train a machine trained model for processing HDR images have a significant impact on image quality. It is found that image quality looks best with a combination of per-pixel and perceptual loss. However, ways to compute perceptual loss use methods that are generally incompatible with HDR images.

The image processing functionality 104 of the disclosure operates in an unconventional manner to achieve processing of HDR images.

The image processing functionality 104 improves the functioning of the underlying computing device by enabling an operating system to process HDR images. In an example, the operating system increases resolution of images rendered from a game engine in order to improve photorealism of the images in an efficient manner and with low latency. In another example, the operating system denoises HDR images. In another example, the operating system generates HDR images to increase a frame rate of a video.

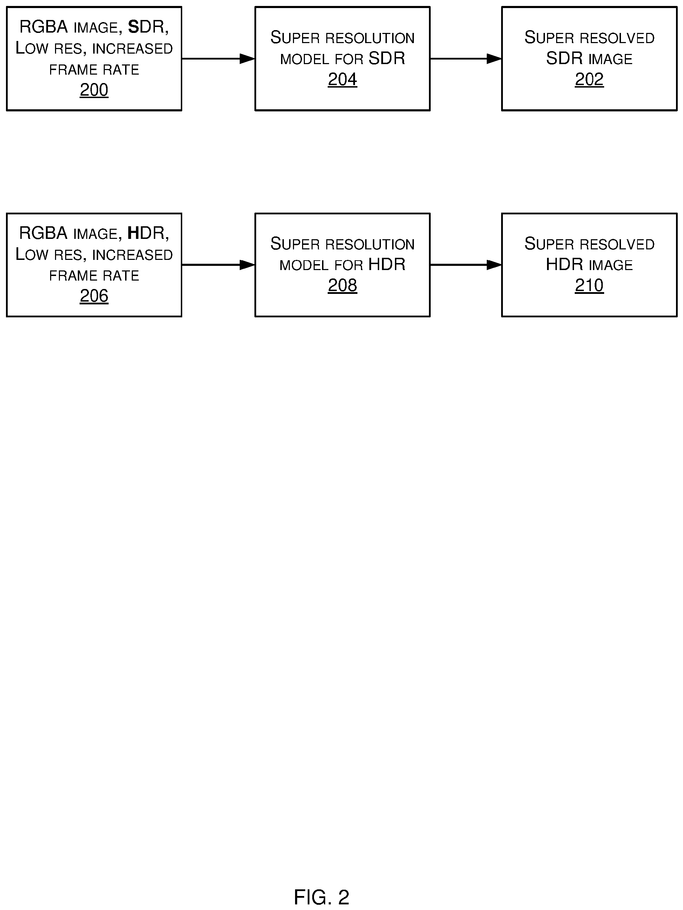

An example where the image processing comprises super resolution is now explained with reference to FIG. 2. FIG. 2 is a flow diagram of using a super resolution model with an SDR image, and of a flow diagram of using a super resolution model with an HDR image, according to some embodiments. As illustrated in the upper part of FIG. 2, a low resolution RGBA image is received 200 at an increased frame rate, such as in the case of a video game where a renderer renders images from a complex 3D model at a lower resolution than a maximum resolution of a display used for the video game. Because of the lower resolution of the rendered images the frame rate of the renderer is increased. Thus, a low resolution RGBA image is received 200 at an increased frame rate. An RGBA image is a four channel color image comprising a red channel, green channel, blue channel and an alpha channel specifying opacity. The low resolution RGBA image is received at an increased frame rate as compared with a maximum frame rate possible for receiving the RGBA image from a rendering pipeline executing on specified hardware where the RGBA image has a larger resolution.

The low resolution RGBA image 200 is input to a super resolution model 204 for standard dynamic range images and the super resolution model processes the low resolution RGBA image to produce a super resolved version 202 of the SDR image.

The super resolution model 204 for SDR images is incompatible with HDR images. If a low resolution, HDR image is input to the super resolution model 204 for SDR images an output image may be produced that comprises visual artifacts and/or which fails to preserve the content and structure of the input HDR image. Where the output image is injected in to an output of a rendering pipeline of a video game, the user may perceive discontinuities and unexpected content changes which disrupt a game experience. In extreme cases, the output image may comprise pixel values which are out of an expected range such that requirements of an HDR format are not complied with and a video output may become corrupted leading to errors.

In various examples, a super resolution model 208 that is compatible with HDR images is formed. With reference to the lower part of FIG. 2, an RGBA image 206 is received at a low resolution. The RGBA image 206 is an HDR image. It may be received at an increased frame rate from a rendering pipeline of a video game, as compared with a maximum frame rate of the rendering pipeline for a higher resolution of the HDR image. In an example, in the case of a video game a renderer renders images from a complex 3D model at a lower resolution than a maximum resolution of a display used for the video game. Because of the lower resolution of the rendered images the frame rate of the renderer is increased. Thus, a low resolution RGBA image is received 206 at an increased frame rate.

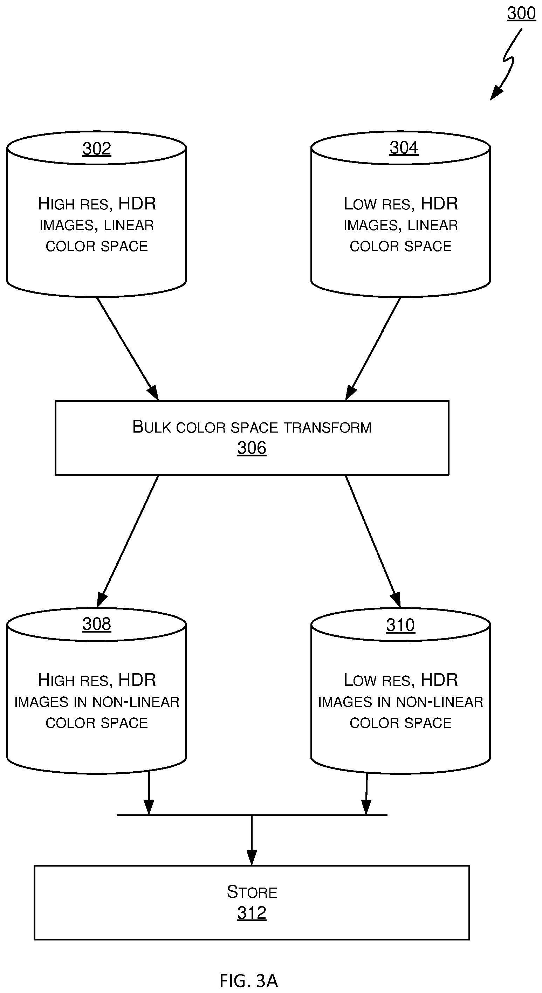

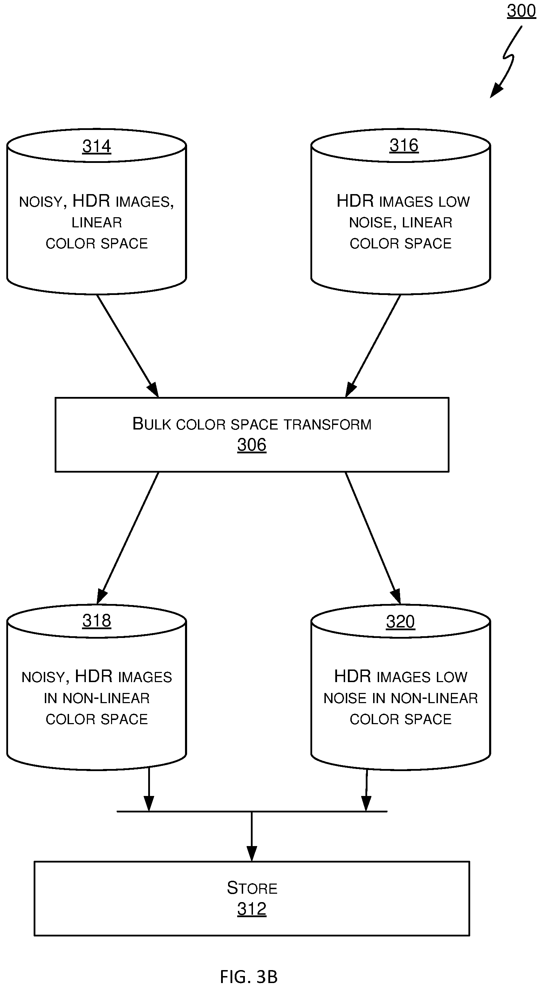

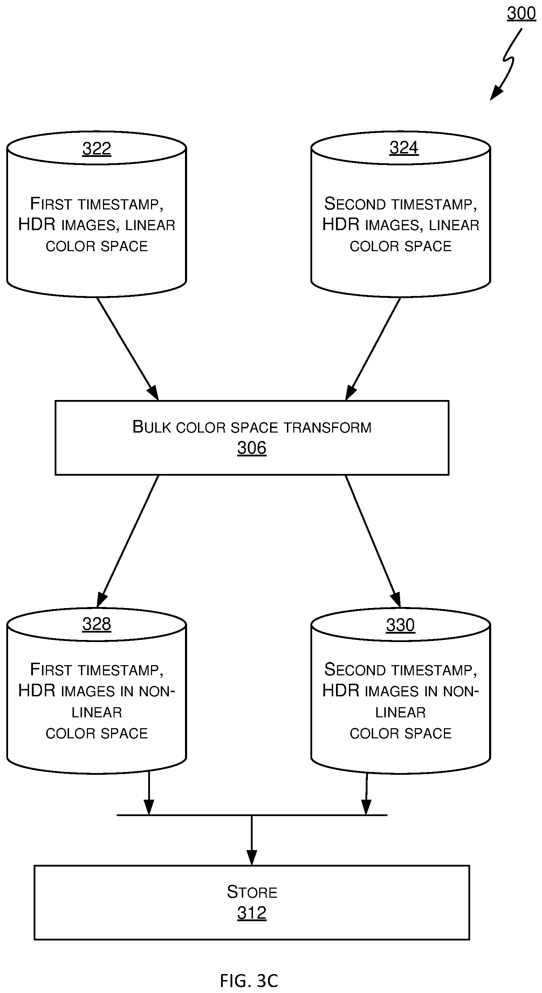

The low resolution HDR image 206 is input to the super resolution model 208 which computes a super resolved version 210 of the HDR image. The super resolved version 210 of the HDR image has a higher resolution than the RGBA input image 200. The super resolution model 208 is a machine trained model that is specially designed to operate effectively for HDR images. In order to train the super resolution model 208 training data may be created as now explained with reference to FIG. 3. If an SDR low resolution image is input to model 208 an output is produced with higher resolution than the input, although the colors in the output image are incorrect due to the color gamut of the SDR input image being different from a color gamut of the model 208.

FIG. 3A is a flow diagram of a method of generating training data for training a super resolution model that is HDR compatible, according to some embodiments. A plurality of high resolution, HDR images are available in a store 302. The HDR images may be obtained by using a game engine of a video game to render the images in HDR format and HDR color space. The high resolution HDR images are in a linear color space such as linear scRGB. The high resolution HDR images may be FP16 pixel format. The term "linear color space" refers to a color space where numerical intensity values correspond proportionally to their perceived intensity.

Corresponding low resolution HDR images are created and stored in store 304. The low resolution HDR images are in the same color space as the high resolution HDR images. The low resolution images and the high resolution images are in the same HDR format such as 16 bits per channel floating point or other HDR format.

A high resolution HDR image corresponds to a low resolution HDR image where they depict the same content. In some examples, the low resolution HDR images are computed from the high resolution HDR images by applying downsampling. Because each low resolution HDR image is computed from a different one of the high resolution HDR images, there are a plurality of training pairs each having a low resolution HDR image and a high resolution HDR image depicting the same content.

In some examples, the low resolution HDR images and corresponding high resolution HDR images are computed by rendering from a 3D model using the same camera viewpoint and with different resolutions.

The HDR images in the linear color space are transformed to a non-linear color space. An image's color space is defined by a color gamut and a transfer function. For SDR, the color gamut is Rec.709 and transfer function is linear or 2.2/2.4 gamma. For HDR, the color gamut is Rec.2020 and transfer function is PQ/HLG. The transfer function describes the relationship between electrical signal, scene light and displayed light.

In an example, the transform is done using a bulk color space transform 306. The HDR images with high resolution in store 302 are transformed using color space transform 306 (so the resulting transformed images are in a non-linear color space) and stored in store 308. The HDR images with low resolution in store 304 are transformed (so the resulting transformed images are in the non-linear color space) using the same color space transform 306 and stored in store 310.

The HDR images in the non-linear color space are stored 312. In some cases, the HDR images in the non-linear color space are stored in binary form in a blob of memory such that training data pairs are in consecutive, contiguous memory regions in order to facilitate efficient reading of training data pairs from the blob during training.

The color space transform 306 maps an image from floating-point 16-bits linear scRGB to floating-point 16 bits BT.2020 with PQ non-linear transform AKA BT.2100(PQ).

The scRGB color space is a wide color gamut RGB color space that is suitable for representing HDR images. It allows coordinates below zero and greater than one (the full range is from -0.5 to just less than +7.5) whilst keeping the color primaries and black and white points the same as for sRGB. This means that scRGB can encompass most of the CIE 1931 color space while maintaining simplicity and backward compatibility with sRGB by not changing the primary colors.

The scRGB color space has two encodings defined for the individual primaries: a linear 16-bit per channel encoding and a nonlinear 12-bit per channel encoding. The 16-bit scRGB encoding is the linear RGB channels converted by 8192x + 4096. The 12-bit scRGB-nl encoding is the linear RGB channels passed through the same opto-electric conversion function as sRGB and then converted by 1280x + 1024.

The BT.2020 color space, also known as Rec. 2020, is a set of specifications defined by the International Telecommunication Union (ITU) for Ultra High Definition (UHD) television. The PQ (Perceptual Quantizer) aspect of BT.2020 is specifically related to High Dynamic Range (HDR) content. BT.2020 is widely used in modern 4K and 8K televisions, projectors, and other display devices. The PQ transfer function, published by the Society of Motion Picture and Television Engineers (SMPTE) as SMPTE ST 2084, was standardized in 2014. It is capable of representing luminance levels up to 10,000 cd/m² (nits) and down to 0.0001 nits. PQ is a non-linear transfer function based on the human visual perception of banding. PQ comprises an electro-optical transfer function EOTF that maps a digital signal to a display luminance. The EOTF comprises a non-linear signal which is based on the human visual perception of banding.

The color space transform 306 maps from a linear color space such as linear scRGB to a non-linear color space such as BT 2020 (PQ) or any other non-linear color space by applying matrix multiplications as explained below. Batches of the HDR images 302 are color transformed together to achieve efficiency. Matrices used in the color space transform 306 are modified in order to enable a batch comprising a plurality of HDR images to be color space transformed in parallel.

To carry out a color space transform from linear scRGB to BT.2020 (PQ transfer function) the following transform may be used. Given an image tensor with shape H, W, C where H is the height, W is the width, and C is the number of channels, represent it as a 3D tensor: [H W C].

The channels are in the order of RGBA, where R is red, G is green, B is blue and A is alpha (transparency). In order to speed up computation, convert the image tensor to a 2D tensor by flattening the height and width dimensions. This results in a tensor with shape H*W, C: [H x W C].

The transformation to a 2D tensor allows performing operations on the image data more efficiently, as it is possible to use matrix multiplication and other linear algebra techniques that are optimized for 2D tensors. For the color space transformation, use the following formula to convert from RGB to XYZ color space: $\left[\begin{matrix}X \\ Y \\ Z \\ 1\end{matrix}\right] = \left[\begin{matrix}0.412391 & 0.357584 & 0.180481 & 0 \\ 0.212639 & 0.715169 & 0.072192 & 0 \\ 0.019331 & 0.119195 & 0.950532 & 0 \\ 0 & 0 & 0 & 1\end{matrix}\right] \left[\begin{matrix}R \\ G \\ B \\ A\end{matrix}\right]$

The transformation is a linear transformation that maps the RGB values to the XYZ color space. The resulting XYZ values can then be converted to the Rec.2020 color space using the following formula: $\left[\begin{matrix}{R}_{2020} \\ {G}_{2020} \\ {B}_{2020} \\ {A}_{2020}\end{matrix}\right] = \left[\begin{matrix}1.716650 & - 0.3556710 & - 0.2533660 & 0 \\ - 0.666684 & 1.6164800 & 0.0157681 & 0 \\ 0.017640 & - 0.0427711 & 0.9421030 & 0 \\ 0 & 0 & 0 & 1\end{matrix}\right] \left[\begin{matrix}X \\ Y \\ Z \\ A\end{matrix}\right]$

This transformation is also a linear transformation that maps the XYZ values to the Rec.2020 color space. The values may be clipped to between 0 and 10,000 and normalized before applying a non-linear transformation. The well-known Perceptual Quantizer (PQ) inverse EOTF transfer function is used to convert the linear RGB values to the non-linear PQ values. The H*W axis is then separated and the image again represented as a 3D tensor [H W C].

FIG. 3B is a flow diagram of a method of generating training data for training a denoising model that is HDR compatible, according to some embodiments. HDR images with low noise 314 are obtained and stored. In an example, the HDR images with low noise are digital photographs captured using a high quality camera. The HDR images with low noise are in a linear color space. For each one of the low noise HDR images there is a corresponding noisy HDR image, such that there is a store of noisy HDR images 316. The noisy HDR images 314 may be formed by adding noise to the HDR images with low noise 316.

A color transform 306 is applied to the noisy HDR images 314 and also to the low noise HDR images 316. The color transform may be computed as described above with reference to FIG. 3A. The output from the color transform 306 is a plurality of noisy HDR images 318 in a non-linear color space and a plurality of low noise HDR images 320 in the non-linear color space. The output from the color transform is stored in store 312. The store holds a plurality of training pairs, each training pair comprising a noisy HDR image in non-linear color space and a low noise HDR image in the same color space and depicting the same content.

FIG. 3C is a flow diagram of a method of generating training data for training a frame generation model that is HDR compatible, according to some embodiments. In the case of frame generation a training pair comprises an image associated with a first timestamp and another image associated with a second timestamp where the images are from a time series of images. The first and second timestamps are different. In an example the time series of images is a video with a camera viewpoint that is moving, or from a static camera viewpoint with an object in a field of view of the camera moving. In an example, first timestamp HDR images 322 are obtained from a video by selecting even numbered frames of the video, and second timestamp HDR images 324 are obtained from the same video by selecting odd numbered frames of the video. The first timestamp images 322 and second timestamp images 324 are in a linear color space.

A color transform 306 is applied to the first timestamp HDR images 322 and the second timestamp HDR images 324. The color transform is as described above with reference to FIG. 3A. The output of the color transform is a plurality of first timestamp HDR images 328 in non-linear color space, and a plurality of second timestamp HDR images 330 in non-linear color space.

In this example, a training pair comprises an even numbered frame of the video and an immediately preceding or immediately following odd numbered frame of the video. Store 312 holds a plurality of training pairs.

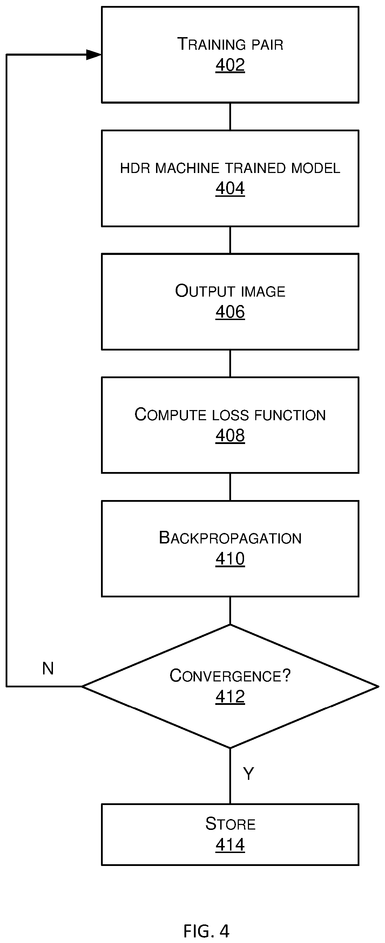

FIG. 4 is a flow diagram of a method of training a model that is HDR compatible, according to some embodiments. Supervised training is used by applying a backpropagation algorithm as now explained.

A training pair 402 is accessed from the store of training data created using the process of any of FIGs. 3A to 3C or any similar process. The training pair comprises a first HDR image and a corresponding second HDR image. The training pairs are images in a same color space. The first image and the second image correspond as they depict the same content or are captured from the same camera (which may be a real or virtual camera). The first image is input to a machine trained model 404 that has been trained using HDR images and so is compatible with HDR images. For example, for training data created using the process of FIG. 3A, the first HDR image (input image) of a training pair is the low resolution, HDR image in a non-linear color space, and the corresponding high resolution, HDR image in the non-linear color space provides a target (ground truth version) for training. For training data created using the process of FIG. 3B, the first HDR image (input image) of a training pair is the noisy, HDR image in a non-linear color space, and the corresponding low-noise, HDR image in the non-linear color space provides a target (ground truth version) for training. For training data created using the process of FIG. 3C, the first HDR image (input image) of a training pair is the first timestamp, HDR image in a non-linear color space, and the corresponding second timestamp, HDR image in the non-linear color space provides a target (ground truth version) for training (or vice versa).

The machine trained model is any suitable type of machine learning model. Values of parameters of the machine trained model are initially set to random values or default values.

In the case the machine trained model is a neural network, intensity values of the first image are input to input nodes of the neural network. Computations are carried out by the input nodes using the intensity values as well as some of the parameter values and results of the computations are sent to a next layer of nodes of the neural network. The next layer of nodes carries out computations and forwards results to a subsequent layer of nodes and this process repeats for each layer of the neural network. Thus, the first image is propagated through the neural network in a forward pass. Activation values of output nodes of the neural network are obtained and assumed to represent intensity values of an HDR output image 406, in the same color space as the training data.

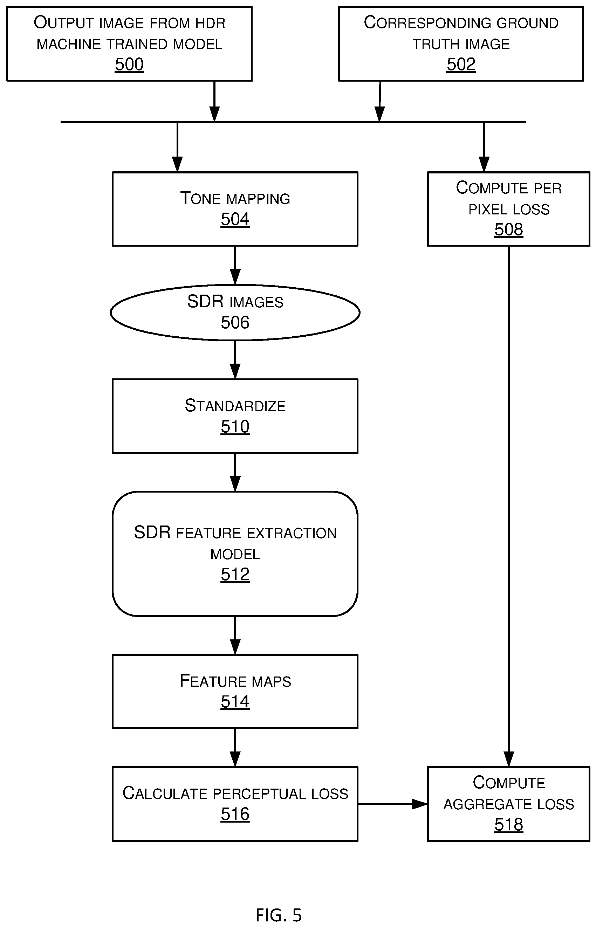

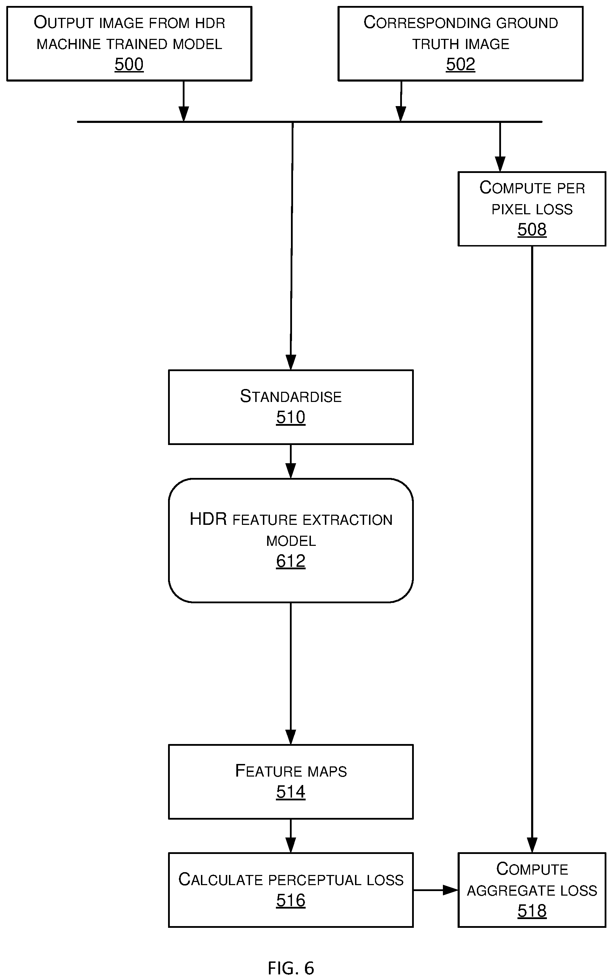

A loss is computed 408, such as by computing a loss metric that quantifies differences between the output of the machine trained model and the second image of the training pair, which is different for training data in the examples of FIGs 3A to 3C, as noted above. Examples of how to compute the loss are described in more detail below with reference to FIG. 5 and FIG. 6. An optimization is computed to find values of the neural network parameters which tend to reduce the loss and the neural network parameters are updated accordingly during a backpropagation 410 through the neural network layers.

A check is made at check 412 as to whether convergence has been reached. The check may comprise checking whether the changes made to the neural network parameter values in backpropagation operation 410 were de minimis or below a threshold. In response to the changes being below a threshold amount, convergence is determined to be reached and the machine trained model parameter values are stored 414. In response to the changes being above a threshold amount, convergence is not reached and the method returns to operation 402 where a next one of the training pairs is accessed from the store of training data.

In an example the HDR machine trained model 404 is a convolutional neural network with less than 500,000 parameters. In the case of super resolution, the HDR machine trained model may have any convolutional neural network architecture built and trained for super resolution. In an example for the super resolution embodiments, the architecture of the HDR machine trained model is a U net architecture such as RUNet.

In an example where the HDR machine trained model 404 performs denoising the model is a denoising autoencoder (DAE). A denoising autoencoder comprises an encoder which is a neural network with a plurality of hidden layers. The encoder takes as input a noisy image and computes a vector encoding of the image in a low-dimensional space. A decoder neural network of the DAE takes the encoding generated by the encoder as input and reconstructs an image. The reconstructed image computed from the encoding is a denoised version of the noisy image. In the case of a DAE the loss function computed at operation 408 may be a mean squared error or binary cross-entropy loss or other type of loss.

In an example where the HDR machine trained model 404 performs image generation (for increasing a frame rate of a video), model 404 may comprise a U-Net architecture neural network with 3D space-time convolutions and deconvolutions such as FLAVR or any other model for single shot multi-frame interpolation.

In an example where the HDR machine trained model 404 performs super resolution, the model operates using single images rather than a plurality of images in a chronological sequence. Being able to operate using single images gives efficiency benefits.

In an example, the HDR machine trained model 404 is a super resolution neural network having two convolution layers for feature map extraction that operate on a low resolution input image. The super resolution neural network then has a sub-pixel convolution layer that aggregates the feature maps from the low resolution space and builds a super resolved image in a single step.

In another example, the HDR machine trained model 404 is a super resolution machine trained model comprising a generative adversarial network (GAN). The GAN is trained using a perceptual loss function which consists of an adversarial loss and a content loss. The adversarial loss uses a discriminator network that is trained to differentiate between the super-resolved images and original images. The GAN is also trained using a content loss taking into account perceptual similarity between the low resolution input image and the high resolution output image.

In another example the HDR machine trained model 404 is a super resolution machine trained model comprising an encoder to encode a low resolution input image into an embedding vector. The embedding vector is then passed through a decoder to produce the high resolution output image.

FIG. 5 is a flow diagram of operation 408 of FIG. 4 in more detail. Operation 408 is about computing a loss metric, including a perceptual loss, in a manner that is compatible with HDR images. The loss metric is an aggregate of at least two components: a per pixel loss and a perceptual loss. In some cases, a generative loss is also included in the aggregate loss. By using a perceptual loss as well as a per pixel loss, performance is enhanced since an output image better preserves content and structure of the input image. Pixel wise losses tend to produce blurry results because they treat each pixel independently and do not capture spatial features that relate to human perception of similar images. Perceptual loss captures high level style as well as helping to preserve content and structure. However, ways of computing perceptual loss which are compatible with HDR images are difficult to achieve.

Operation 408 computes a loss, quantified by a loss metric, between an output image 500 from the HDR machine trained model and a corresponding ground truth image 502 from the training data pair. In some examples, the corresponding ground truth image 502 is the second image of a training pair, as explained with reference to FIGs. 3A to 3C and 4. The images 500 and 502 are in the same color space have the same bit depth such as 16 bits per color channel floating point.

The per pixel loss is computed 508 as a difference between pixel values of the images 500 and 502 on each color channel. The difference may be computed per pixel and per color channel and then summed, averaged or aggregated in another way.

The perceptual loss is calculated by computing a feature map for each of the HDR images 500 and 502. The difference between the feature maps is then computed to give a perceptual loss. In order to compute the feature maps, a feature extraction model 512 is used which is suitable for SDR images. Because the feature extraction model is incompatible with HDR images, the HDR images 500, 502 are converted to SDR. Tone mapping 504 is applied to the HDR images 500, 502 to convert the HDR images 500, 502 to SDR images 506. The tone mapping converts intensities of pixels in each of the different color channels of an image so as to be within a color space suitable for SDR. Any suitable tone mapper may be used such as a Reinhard tone mapper (also referred to as a tone mapping operator) or an extended Reinhard tone mapper. The HDR format of the HDR images is also converted to SDR format. In an example, the HDR images in BT.2100 color space (non-linear) are transformed to SDR images in sRGB with gamma correction (non-linear) color space. The SDR images are standardized 510 to be suitable for input to the SDR feature extraction model 512. The standardization process comprises resizing the images to be of a size compatible with the SDR object recognition model. In an example the images are resized to 244 x 244 for input to VGGNet. The standardization process may additionally or alternatively comprise normalizing the intensity values of the pixels of the images to be between 0 and 1, for example, to be suitable for input to VGGNet.

A standardized image is input to the SDR object recognition model. The standardized image is processed through the SDR object recognition model to produce an output at an output layer of the SDR object recognition model. However, the output from the output layer is not used. Activations from an intermediate layer of the SDR feature extraction model 512 are read out and form a feature map. Both images 500 and 502 are processed through the SDR object recognition model to obtain two feature maps 514.

In an example the SDR object recognition model is VGGNet which is a convolutional neural network using small 3x3 convolutional filters throughout the network. However, it is not essential to use VGGNet as any SDR object recognition model may be used such as ALEX net or others.

The perceptual loss is calculated using the feature maps 514 such as by computing a mean squared error loss or similar loss between the extracted features for the output and ground truth.

The perceptual loss 516 is aggregated with the per pixel loss 508 by making a weighted sum to compute an aggregated loss 518. The values of the weights used in the weighted sum are determined empirically or set to default values.

By using the tone mapping it is thus possible to compute a perceptual loss even for HDR images, where the feature extractor is incompatible with HDR images.

FIG. 6 is a flow diagram of another example of operation 408 of FIG. 4 in more detail. In the example of FIG. 6 the feature extraction model 612 is compatible with HDR images. In this case the images 500, 502 are standardized 510 to be suitable for input to the feature extraction model 612, such as by resizing and/or normalization. The images 500, 502 have the same bit depth. The standardized images are input to an HDR feature extraction model 612 which is an object recognition model compatible with HDR images. As described with reference to FIG. 5, feature maps are read out from an intermediate layer of the HDR feature extraction model 612. A perceptual loss is computed 516 as described with reference to FIG. 5. An aggregate loss is computed 518, as described with reference to FIG. 5, by combining the perceptual loss and the per pixel loss.

In an example the HDR object recognition model is an autoencoder trained using HDR images of the same format as the images 500, 502. In an example the format is BT.2100 color space (non-linear). However, it is not essential to use an autoencoder as any suitable machine trained model may be used that has been trained using HDR images.

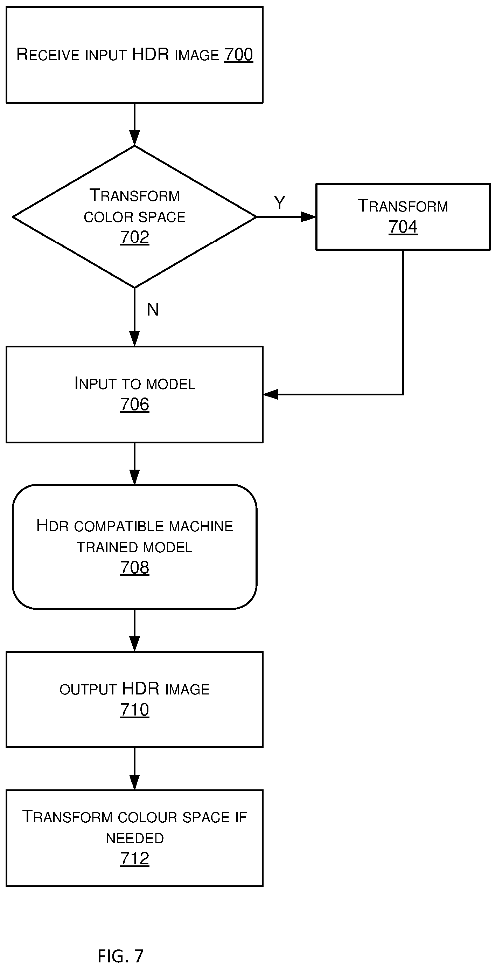

FIG. 7 is a flow diagram of a method of using an HDR compatible machine trained model 708, according to some embodiments. The machine trained model 708 has been trained according to the method of FIG. 4 or a similar method, with a loss function shown in FIG. 5, FIG. 6 or a similar loss function, and using training data produced using any of FIGs. 3A to 3C or a similar method. In an example, the method of FIG. 7 is performed by an operating system during real time execution of a video game, or real time display of a streamed video, at a host computing device of the operating system. In another example, the method of FIG. 7 is performed using other software (in some cases, in concert with an accelerator executing the machine trained model) of another type of computing device.

An input HDR image is received. The input HDR image may be received from a pipeline of the operating system. In some cases, the pipeline receives a stream of video over a communications link and manages display of the streamed video at a display associated with the operating system. In some cases, the pipeline is a rendering pipeline that renders images from a 3D model of a video and outputs the rendered images for display at a display associated with the operating system. A rendering pipeline may be operating at an increased frame rate to render low resolution images from a 3D model of a video game.

In some examples, the operating system checks 702 what color space the input HDR image is in by inspecting a manifest of the input image or a setting of the video game or video. For example, the operating system has one or more rules that specify, if the input is scRGB, the input is transformed before passing to the model, and if the input is RGB10, then the pixel format is modified to FP16 RGBA before passing the input to the model.

The operation 706 comprises inputting the input HDR image (which may have been transformed at operation 704) to the HDR compatible machine trained model 708. The HDR compatible machine trained model 708 has been trained using images created using the process of any of FIGs. 3A to C or a similar process. Also, the HDR compatible machine trained model 708 has been trained according to the method of FIG. 4 or a similar method, with a loss function shown in FIG. 5, FIG. 6 or a similar loss function.

The model 708 computes an output HDR image 710. The output HDR image is in the same color space as the input image from operation 706. Therefore, in some cases, the color space of the output image is transformed 712 back to the color space of the input image received at operation 700. To transform the color space of the output image from BT.2020(PQ transfer function) to Linear scRGB the following process may be used.

The well-known PQ EOTF transfer function is applied to the output image and scaled by 10,000 to obtain linear RGB values proportional to the displayed luminance.

For the color space transformation, an example uses the following formula to convert from RGB to XYZ color space: $\left[\begin{matrix}X \\ Y \\ Z \\ 1\end{matrix}\right] = \left[\begin{matrix}0.636958 & 0.144617 & 0.168881 & 0 \\ 0.262700 & 0.677998 & 0.059302 & 0 \\ 0 & 0.028073 & 1.060985 & 0 \\ 0 & 0 & 0 & 1\end{matrix}\right] \left[\begin{matrix}R \\ G \\ B \\ A\end{matrix}\right]$

The resulting XYZ values may then be converted to the Rec.709 color space using the following formula: $\left[\begin{matrix}{R}_{709} \\ {G}_{709} \\ {B}_{709} \\ {A}_{709}\end{matrix}\right] = \left[\begin{matrix}3.240970 & - 1.537383 & - 0.498611 & 0 \\ - 0.969244 & 1.875968 & 0.041555 & 0 \\ 0.055630 & - 0.203977 & 1.056972 & 0 \\ 0 & 0 & 0 & 1\end{matrix}\right] \left[\begin{matrix}X \\ Y \\ Z \\ A\end{matrix}\right]$

The image values in the linear scRGB color space are scaled such as by 80(nits) or another amount to normalize. Up to this point, the image may be processed as a 2D tensor. In this case, the H*W axis is then separated and the image is represented as a 3D tensor [H W C].

The output image is an HDR image preserving the content and structure of the input. For example, the output HDR image is used directly by the operating system for display. When the method of FIG. 7 is performed by an operating system and no internet browser is involved in the method of FIG. 7, incompatibility of the HDR image format with internet browsers is avoided.

Because the model 708 is compatible with HDR images, the resulting output HDR image 710 is high quality and preserves content and structure of the input of operation 700. Because the model 708 is a machine trained model it is efficient to execute by the operating system such as using a hardware accelerator of the host computing device. The model 708 is compact, having a few hundred thousand parameters, such as less than 500 thousand parameters, making it suitable for local execution at the host computing device.

Because the model 708 is efficient to execute, such as by being parallelizable, it is operable in real time at a video frame rate of 30 frames per second or more. In some examples, because the model 708 is efficient to execute as compared to a rendering operation for rendering from a complex 3D model, a video game executing at the host computing device is improved in performance. A frame rate of a rendering pipeline is increased by reducing a resolution of images rendered by the rendering pipeline from a complex 3D model. In examples where the model 708 is a super resolution model, the resolution of the rendered images is increased by the model 708. Because the super resolution model is executable at higher frame rates than the rendering operation efficiencies are gained through workload balancing between the rendering operation and the super resolution operation. Preferably the method of FIG. 7 is executed at a rate matching or exceeding a rate of the pipeline.

The method of FIG. 7 is operable for any type of HDR compatible machine trained model, including a denoising model for denoising HDR images, a frame generation model for generating HDR images or a super resolution model for super resolving HDR images.

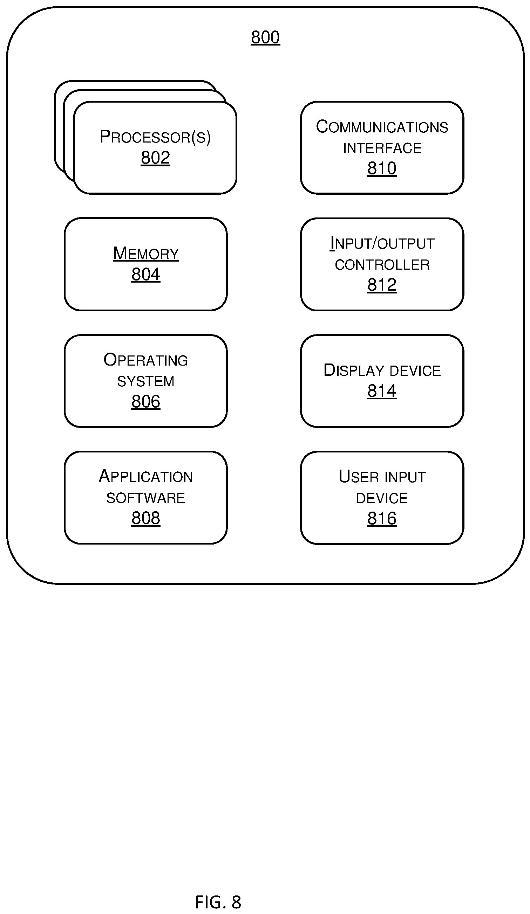

FIG. 8 illustrates an example computing-based device in which functionality for processing HDR images is implemented. The computing-based device is any form of a computing and/or electronic device, and in which functionality for processing HDR images is implemented in some examples. In some examples, the computing-based device 800 is a general-purpose computer that is activated or reconfigured by a computer program stored in the computer. In other examples the computing-based device is specially constructed for the intended purpose.

Computing-based device 800 comprises one or more processors 802 which are microprocessors, controllers or any other suitable type of processors for processing computer executable instructions to control the operation of the device in order to process HDR images, or generate training data for training an HDR image processing model, or train an HDR compatible model. The processors 802 may include at least one general-purpose processing device such as a central processing unit, microprocessor, complex instruction set computing (CISC) microprocessor, reduced instruction set computing (RISC) microprocessor, or other general-purpose processing device. In some examples, for example where a system on a chip architecture is used, the processors 802 include one or more special-purpose processing device such as a fixed function block (also referred to as an accelerator) which implements a part of the method of any of figures 3 to 7 in hardware (rather than software or firmware). The special-purpose processing device may be configured to execute instructions for performing the operations and methods described herein. Platform software comprising an operating system 806 or any other suitable platform software is provided at the computing-based device to enable application software 808 such as a video game to be executed on the device, or a video streamed and played on the device.

The computer executable instructions are provided using any computer-readable media that is accessible by computing based device 800. Computer-readable media includes, for example, computer storage media such as memory 804 and communications media. Computer storage media, such as memory 804, includes volatile and non-volatile, removable and non-removable media implemented in any method or technology for storage of information such as computer readable instructions, data structures, program modules or the like. Computer storage media includes random access memory (RAM), read only memory (ROM), erasable programmable read only memory (EPROM), electronic erasable programmable read only memory (EEPROM), flash memory or other memory technology, compact disc read only memory (CD-ROM), digital versatile disks (DVD) or other optical storage, magnetic cassettes, magnetic tape, magnetic disk storage or other magnetic storage devices, or any other non-transmission medium that is used to store information for access by a computing device. In contrast, communication media embody computer readable instructions, data structures, program modules, or the like in a modulated data signal, such as a carrier wave, or other transport mechanism. As defined herein, computer storage media does not include communication media. Therefore, a computer storage medium should not be interpreted to be a propagating signal per se. Although the computer storage media (memory 804) is shown within the computing-based device 800 it will be appreciated that the storage is, in some examples, distributed or located remotely and accessed via a network or other communication link (e.g. using communication interface 810).

The computing-based device 800 also comprises an input/output controller 812 arranged to output display information to a display device 814 which may be separate from or integral to the computing-based device 800. The display information may display a video game. The input/output controller 812 is also arranged to receive and process input from one or more devices, such as a user input device 816 (e.g. a video game console, mouse, keyboard, camera, microphone or other sensor). In an embodiment the display device 814 also acts as the user input device 816 if it is a touch sensitive display device. The input/output controller 812 outputs data to devices other than the display device in some examples.

Alternatively or in addition to the other examples described herein, examples include any combination of the following clauses.

Clause A. A method performed by a computing device, the computing device hosting an accelerator, the method comprising:
receiving an input image comprising a high dynamic range (HDR) image from a pipeline;
processing the input image to produce an output image, using a machine trained model that is compatible with HDR images, executing at least in part on the accelerator;
using the output image in the pipeline;
wherein the method is executed at a rate matching or exceeding a rate of the pipeline.

Clause B The method of clause A wherein the pipeline is a pipeline of an operating system, and wherein processing the input image to produce the output image comprises any of: super resolving the input image, denoising the input image or generating a frame associated with the input image.

Clause C The method of any preceding clause wherein the machine trained model has been trained using training pairs, and wherein each training pair comprises: a high resolution HDR image and a low resolution HDR image depicting the same content; or
a noisy HDR image and an HDR image with less noise depicting the same content; or
an HDR image with a first time stamp and a second HDR image with a second time stamp, different from the first time stamp, and where the HDR images are from a same time series of images.

Clause D The method of clause C wherein the training pairs are in a non-linear color space.

Clause E The method of any preceding clause wherein the machine trained model has been trained using a loss metric comprising a per pixel loss and a perceptual loss, and wherein the perceptual loss has been computed using a second machine trained model, the second machine trained model being incompatible with HDR images.

Clause F The method of clause E wherein the perceptual loss further has been computed by tone mapping images before input to the second machine trained model.

Clause G The method of clause F wherein the perceptual loss further has been computed by standardizing a size of the images before input to the second machine trained model.

Clause H The method of any preceding clause wherein the machine trained model has been trained using a loss metric comprising a per pixel loss and a perceptual loss, and wherein the perceptual loss has been computed using a second machine trained model, the second machine trained model having been trained using HDR images.

Clause I The method of any preceding clause comprising determining whether the input image is in a non-linear color space and in response to determining the input image is not in a non-linear color space, transforming the color space of the input image to a non-linear color space prior to processing the input image.

Clause J The method of clause I wherein the machine trained model has been trained using images in the non-linear color space.

Clause K An operating system of a computing device, the computing device hosting an accelerator, the operating system comprising:
a rendering pipeline;
a memory storing an input image received from a pipeline of the operating system;
a machine trained model that is compatible with HDR images, the machine trained model configured to execute at least in part on the accelerator to process the input image to produce an output image.

Clause L The operating system of clause K configured to process input images at a rate matching or exceeding a frame rate of the pipeline.

Clause M The operating system of clause K or clause L wherein the pipeline renders the input image from a 3D model of a video game and wherein the input image has a first resolution lower than a resolution of a display associated with the computing device.

Clause N The operating system of any of clauses K to M arranged to determine whether the input image is in a non-linear color space and in response to determining the input image is not in a non-linear color space, transforming the color space of the input image to a non-linear color space prior to processing the input image.

Clause O An apparatus comprising:
a processor;
an accelerator;
a rendering pipeline;
a memory storing instructions that, when executed by the processor, perform operations comprising:
   receiving an input image comprising a high dynamic range, HDR, image with a first resolution from the rendering pipeline;
   super resolving the input image to produce an output image with a second resolution higher than the first resolution, using a machine trained model that is compatible with HDR images, executing at least in part on the accelerator;
   using the output image in place of an output image of the rendering pipeline; wherein the super resolving is executed at a rate matching or exceeding a rendering rate of the rendering pipeline.

Clause P The apparatus of clause O wherein the rendering pipeline renders the input image from a 3D model of a video game and wherein the first resolution is lower than a resolution of a display associated with the computing device.

Clause Q The apparatus of clause O or clause P wherein the machine trained model has been trained using training pairs, each training pair comprising a high resolution HDR image and a low resolution HDR image depicting the same content.

Clause R The apparatus of any of clauses O to Q wherein the training pairs are in a non-linear color space.

Clause S The apparatus of any of clauses O to R wherein the machine trained model has been trained using a loss metric comprising a per pixel loss and a perceptual loss, and where the perceptual loss has been computed using a second machine trained model, the second machine trained model being incompatible with HDR images.

Clause T The apparatus of clause S wherein the perceptual loss further has been computed by tone mapping images before input to the second machine trained model.

The term 'computer' or 'computing-based device' is used herein to refer to any device with processing capability such that it executes instructions. Those skilled in the art will realize that such processing capabilities are incorporated into many different devices and therefore the terms 'computer' and 'computing-based device' each include personal computers (PCs), servers, mobile telephones (including smart phones), tablet computers, set-top boxes, media players, games consoles, personal digital assistants, wearable computers, and many other devices.

The methods described herein are performed, in some examples, by software in machine readable form on a tangible storage medium e.g. in the form of a computer program comprising computer program code means adapted to perform all the operations of one or more of the methods described herein when the program is run on a computer and where the computer program may be embodied on a computer readable medium. The software is suitable for execution on a parallel processor or a serial processor such that the method operations may be carried out in any suitable order, or simultaneously.

Those skilled in the art will realize that storage devices utilized to store program instructions are optionally distributed across a network. For example, a remote computer is able to store an example of the process described as software. A local or terminal computer is able to access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a digital signal processor (DSP), programmable logic array, or the like.

Any range or device value given herein may be extended or altered without losing the effect sought, as will be apparent to the skilled person.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items.

The operations of the methods described herein may be carried out in any suitable order, or simultaneously where appropriate. Additionally, individual blocks may be deleted from any of the methods without departing from the scope of the subject matter described herein. Aspects of any of the examples described above may be combined with aspects of any of the other examples described to form further examples without losing the effect sought.

The term 'comprising' is used herein to mean including the method blocks or elements identified, but that such blocks or elements do not comprise an exclusive list and a method or apparatus may contain additional blocks or elements.

Additionally, as used in this disclosure, phrases of the form "at least one of an A, a B, or a C," "at least one of A, B, and C," and the like, should be interpreted to select at least one from the group that comprises "A, B, and C." Unless explicitly stated otherwise in connection with a particular instance in this disclosure, this manner of phrasing does not mean "at least one of A, at least one of B, and at least one of C." As used in this disclosure, the example "at least one of an A, a B, or a C," would cover any of the following selections: {A}, {B}, {C} , {A, B}, {A, C}, {B, C}, and {A, B, C}.

It will be understood that the above description is given by way of example only and that various modifications may be made by those skilled in the art. The above specification, examples and data provide a complete description of the structure and use of example embodiments. Although various embodiments have been described above with a certain degree of particularity, or with reference to one or more individual embodiments, those skilled in the art could make numerous alterations to the disclosed embodiments without departing from the scope of this specification.

## Claims

1. A method performed by a computing device, the computing device hosting an accelerator, the method comprising:
receiving an input image (700) comprising a high dynamic range (HDR) image (700) from a pipeline;
processing the input image (700) to produce an output image (710), using a machine trained model (708) that is compatible with HDR images, executing at least in part on the accelerator;
using the output image in the pipeline;
wherein the method is executed at a rate matching or exceeding a rate of the pipeline.

2. The method of claim 1 wherein the pipeline is a pipeline of an operating system, and wherein processing the input image to produce the output image comprises any of: super resolving the input image, denoising the input image or generating a frame associated with the input image.

3. The method of any preceding claim wherein the machine trained model has been trained using training pairs, and wherein each training pair comprises:
a high resolution HDR image and a low resolution HDR image depicting the same content; or
a noisy HDR image and an HDR image with less noise depicting the same content; or
an HDR image with a first time stamp and a second HDR image with a second time stamp, different from the first time stamp, and where the HDR images are from a same time series of images.

4. The method of claim 3 wherein the training pairs are in a non-linear color space.

5. The method of any preceding claim wherein the machine trained model has been trained using a loss metric comprising a per pixel loss and a perceptual loss, and wherein the perceptual loss has been computed using a second machine trained model, the second machine trained model being incompatible with HDR images.

6. The method of claim 5 wherein the perceptual loss further has been computed by tone mapping images before input to the second machine trained model.

7. The method of claim 6 wherein the perceptual loss further has been computed by standardizing a size of the images before input to the second machine trained model.

8. The method of any preceding claim wherein the machine trained model has been trained using a loss metric comprising a per pixel loss and a perceptual loss, and wherein the perceptual loss has been computed using a second machine trained model, the second machine trained model having been trained using HDR images.

9. The method of any preceding claim comprising determining whether the input image is in a non-linear color space and in response to determining the input image is not in a non-linear color space, transforming the color space of the input image to a non-linear color space prior to processing the input image.

10. The method of claim 9 wherein the machine trained model has been trained using images in the non-linear color space.

11. An operating system of a computing device, the computing device hosting an accelerator, the operating system comprising:
a rendering pipeline;
a memory storing an input image (700) received from a pipeline of the operating system;
a machine trained model (708) that is compatible with HDR images, the machine trained model (708) configured to execute at least in part on the accelerator to process the input image (700) to produce an output image (710).

12. The operating system of claim 11 configured to process input images at a rate matching or exceeding a frame rate of the pipeline.

13. The operating system of claim 11 or claim 12 wherein the pipeline renders the input image from a 3D model of a video game and wherein the input image has a first resolution lower than a resolution of a display associated with the computing device.

14. The operating system of any of claims 11 to 13 arranged to determine whether the input image is in a non-linear color space and in response to determining the input image is not in a non-linear color space, transforming the color space of the input image to a non-linear color space prior to processing the input image.

15. An apparatus comprising:
a processor (802);
an accelerator;
a rendering pipeline;
a memory (804) storing instructions that, when executed by the processor, perform operations comprising:
receiving an input image (700) comprising a high dynamic range, HDR, image (700) with a first resolution from the rendering pipeline;
super resolving the input image (700) to produce an output image (710) with a second resolution higher than the first resolution, using a machine trained model (708) that is compatible with HDR images, executing at least in part on the accelerator;
using the output image (710) in place of an output image of the rendering pipeline;
wherein the super resolving is executed at a rate matching or exceeding a rendering rate of the rendering pipeline.
